# EUROPÄISCHE PATENTSCHRIFT

(11) **EP 4 117 147 B1**
(45) Veröffentlichungstag und Bekanntmachung des Hinweises auf die Patenterteilung: **16.09.2026**
(21) Anmeldenummer: 22178940.7
(22) Anmeldetag: 14.06.2022
(51) Int. Cl.: H02K 1/16, H02K 15/066, H02K 15/021

(54) **INNENWERKZEUG UND VERFAHREN ZUM AUSBILDEN EINES INNENWERKZEUGS ZUM HERSTELLEN EINES HALBZEUGS FÜR EIN BLECHPAKET EINER ELEKTRISCHEN MASCHINE SOWIE VORRICHTUNG ZUM HERSTELLEN EINES BLECHPAKETS**
INNER TOOL AND METHOD FOR FORMING AN INNER TOOL FOR MANUFACTURING A SEMI-FINISHED PRODUCT FOR A LAMINATED CORE OF AN ELECTRIC MACHINE AND DEVICE FOR MANUFACTURING A LAMINATED CORE
OUTIL INTÉRIEUR ET PROCÉDÉ DE FORMATION D'UN OUTIL INTÉRIEUR PERMETTANT DE FABRIQUER UN DEMI-PRODUIT POUR UN PAQUET DE TÔLES D'UNE MACHINE ÉLECTRIQUE, AINSI QUE DISPOSITIF DE FABRICATION D'UN PAQUET DE TÔLES

(30) Priorität: 08.07.2021 DE 102021117698
(43) Veröffentlichungstag der Anmeldung: 11.01.2023
(73) Patentinhaber: Aumann Espelkamp GmbH, 32339 Espelkamp (DE)
(72) Erfinder: Lüttge, Wolfgang, 31787 Hameln (DE); Sell-Le Blanc, Florian, 76185 Karlsruhe (DE); Elert, Alexander, 49152 Bad Essen (DE)
(74) Vertreter: Bittner, Thomas L.

(56) Entgegenhaltungen:
- EP-A2- 1 107 428
- DE-A1- 102009 047 454
- US-A- 3 914 859
- US-A- 6 141 865

## Beschreibung

Die Erfindung betrifft ein Innenwerkzeug und ein Verfahren zum Ausbilden eines Innenwerkzeugs zum Herstellen eines Halbzeugs für ein Blechpaket einer elektrischen Maschine sowie eine Vorrichtung zum Herstellen eines Blechpakets für eine elektrische Maschine.

### Hintergrund

Statoren elektrischer Maschinen können mit entlang des Umfangs nach innen vorstehenden Polzähnen gebildet sein, zwischen denen Aufnahmenuten angeordnet sind. Beim Ausbilden der dem Stator zugeordneten Statorwicklung werden Leiterabschnitte der Wicklung in den Aufnahmenuten angeordnet.

Aus dem Dokument EP 3 544 161 A1 ist ein Verfahren zum Einbringen einer Wellenwickelmatte in einem Stator einer elektrischen Maschine bekannt. Der Stator ist beispielsweise mittels eines Statorblechpakets gebildet. Zum Einbringen der Draht- oder Leiterabschnitte der Wellenwickelmatte in den Aufnahmenuten zwischen den innenliegenden Polzähnen des Stators werden den Polzähnen einzeln zugeordnete Drahtvereinzelungselemente benachbart zu den Polzähnen angeordnet. Nach dem Ausbilden der Statorwicklung mit Hilfe des Einbringens der Wellenwickelmatte in der Anordnung von Polzähnen und Aufnahmenuten werden die Drahtvereinzelungselemente wieder entfernt. Hierbei ist vorgesehen, die Drahtvereinzelungselemente an einem als Schieber ausgebildeten Bauteil auszubilden, welches an der Stirnseite des Stators angeordnet ist, um die Drahtvereinzelungselemente vor dem Einbringen der Leiterabschnitte der Wellenwickelmatte in den Aufnahmenuten den Polzähnen innenseitig gegenüberliegend anzuordnen und danach wieder zu entfernen. Die so den Polzähnen und den Aufnahmenuten zugeführte Wellenwickelmatte besteht regelmäßig aus einer Mehrzahl von Wellenwicklungen des Drahtmaterials, insbesondere Kupferdraht.

Das Dokument US 6,141,865 A beschreibt eine Wickelvorrichtung umfassend eine Kernspannvorrichtung mit einem kreisförmigen Außenumfang, plattenförmige Statorkern-Spannvorrichtungen, die so gestaltet sind, dass sie eine Statorkernen entsprechende Form haben, und Haltevorrichtungen, die abnehmbar an dem Außenumfang der Kernspannvorrichtung zum Halten der Statorkern-Spannvorrichtungen installiert werden können. Nach einem Spulenwickelvorgang werden die Statorkern-Spannvorrichtungen entfernt und mehrere geteilte Statorkerne in die Spulen eingeführt.

Das Dokument DE 680 038 A betrifft ein Verfahren zum Aufbau des mit Nieten zur Aufnahme der Wicklung versehenen Ständerblechpaketes von Wechselstrom- (Drehstrom-) Motoren, insbesondere Tauchpumpenmotoren, wobei Paketsektoren des Ständerblechpaketes einzeln in bzw. um die zuvor fertiggestellte Wicklung (Ankerwicklung) gesetzt und sodann miteinander zu einem Ganzen verbunden werden.

In dem Dokument US 3,914,859 A ist ein Verfahren zur Herstellung einer Statorkonstruktion mit geschlossener Nut für Schrittmotoren offenbart. Das Verfahren beinhaltet die Verwendung eines röhrenförmigen Elements. In die Außenfläche des Rohres sind axiale Schlitze gefräst. Vorgeformte Statorzähne werden dann zusammengesetzt, indem Kanten in die axialen Schlitze eingeführt werden, wobei die Zähne radial positioniert sind. Das Innere des Rohrs wird dann gefräst, wodurch die Innenkanten der Zähne freigelegt werden. Zwischen diese Statorzähne werden Wicklungen eingelegt oder maschinell aufgewickelt. Die Anordnung wird dann in eine magnetische Hülse eingepresst, die das Gehäuse bildet.

Aus dem Dokument JP 2005-184887 A ist ein Verfahren zum Herstellen eines Stators bekannt, das einen Schritt des Vorbereitens eines ringförmigen Isolierelements umfasst, das durch Biegen schräg nach innen zu der radialen Richtung des herzustellenden Stators gebildet wird. Das Verfahren umfasst weiter einen Schritt des Bildens einer Wicklungseinheit durch Wickeln einer Spule auf diesem isolierenden Element, einen Schritt zum Bilden einer ringförmigen Wicklungsgruppe durch Anordnen der einen Endseite einer Vielzahl von Wicklungseinheiten auf dem Umfang, einen Schritt des Anordnens von Zähnen eines geteilten aus einem Jochstück und den Zähnen bestehenden Kerns nach innen an der Außenseite der Wicklungsgruppe, einen Schritt des Einführens der Zähne in ein Zahn-Einführloch des isolierenden Elements jeder der mehreren Wicklungseinheiten durch Richten der Zähne in Richtung der Mitte der Wicklungsgruppe, wodurch jede Wicklungseinheit über die Vielzahl der Zähne überbrückt wird, und einen Schritt des ringförmigen Verbindens der Jochstücke der benachbarten geteilten Kerne miteinander an der Umfangsseite der Wicklungsgruppe.

### Zusammenfassung

Aufgabe der Erfindung ist es, ein Innenwerkzeug und ein Verfahren zum Ausbilden eines Innenwerkzeugs zum Herstellen eines Halbzeugs für ein Blechpaket einer elektrischen Maschine zu schaffen, mit denen eine Wicklung effizient und für das Draht- oder Leitermaterial materialschonend zwischen Aufnahmenuten der Polzähne eingebracht werden kann. Hierfür soll weiterhin eine Vorrichtung zum Herstellen eines Blechpakets für eine elektrische Maschine bereitgestellt werden.

Zur Lösung sind ein Innenwerkzeug und ein Verfahren zum Ausbilden eines Innenwerkzeugs zum Herstellen eines Halbzeugs für ein Blechpaket einer elektrischen Maschine gemäß den unabhängigen Ansprüchen 1 und 11 geschaffen. Weiterhin ist eine Vorrichtung zum Herstellen eines Blechpakets für eine elektrische Maschine nach dem nebengeordneten Anspruch 12 geschaffen. Ausgestaltungen sind Gegenstand von abhängigen Unteransprüchen.

Nach einem Aspekt ist ein Innenwerkzeug zum Herstellen eines Halbzeugs für ein Blechpaket einer elektrischen Maschine geschaffen, aufweisend: einen Werkzeugkörper; Aufnahmen, die an dem Werkzeugkörper entlang einer Umfangsfläche beabstandet zueinander gebildet und eingerichtet sind, jeweils ein Blechpaketsegment eines (segmentierten) Blechpakets, zum Beispiel eines segmentierten Stators oder eines segmentierten Rotors, aufzunehmen, derart, dass ein an der Aufnahme angeordnetes Blechpaketsegment jeweils in radialer Richtung vom Werkzeugkörper absteht und zwischen benachbarten Blechpaketsegmenten Aufnahmenuten für Leiterabschnitte einer Spulenwicklung gebildet sind; und Werkzeugelemente, die den Blechpaketsegmenten zugeordnet und eingerichtet sind, die Blechpaketsegmente an dem Werkzeugkörper zu halten und die Leiterabschnitte der Spulenwicklung beim Einbringen in den Aufnahmenuten im Bereich der in axialer Richtung gegenüberliegenden Endabschnitte der Blechpaketsegmente in die Aufnahmenuten zu führen.

Nach einem weiteren Aspekt ist ein Verfahren zum Ausbilden eines Innenwerkzeugs für die Herstellung eines Halbzeugs für ein Blechpaket einer elektrischen Maschine geschaffen, aufweisend: Bereitstellen eines Werkzeugkörpers; Anordnen von Blechpaketsegmenten eines (segmentierten) Blechpakets, zum Beispiel eines segmentierten Stators oder eines segmentierten Rotors, in Aufnahmen, die an dem Werkzeugkörper entlang einer Umfangsfläche beabstandet zueinander gebildet sind, derart, dass ein an der Aufnahme angeordnetes Blechpaketsegment jeweils in radialer Richtung vom Werkzeugkörper absteht und zwischen benachbarten Blechpaketsegmenten Aufnahmenuten für Leiterabschnitte einer Spulenwicklung gebildet sind; und Anordnen von Werkzeugelementen an den Blechpaketsegmenten, wobei die Werkzeugelemente eingerichtet sind, die Blechpaketsegmente an dem Werkzeugkörper zu halten und die Leiterabschnitte der Spulenwicklung beim Einbringen in den Aufnahmenuten im Bereich der in axialer Richtung gegenüberliegenden Endabschnitte der Blechpaketsegmente in die Aufnahmenuten zu führen.

Nach einem anderen Aspekt ist eine Vorrichtung zum Herstellen eines Blechpakets für eine elektrische Maschine geschaffen, aufweisend: ein Innenwerkzeug, bei dem in Aufnahmen, die am Werkzeugkörper entlang einer Umfangsfläche beabstandet zueinander gebildet sind, jeweils ein Blechpaketsegment eines (segmentierten) Blechpakets, zum Beispiel eines segmentierten Stators oder eines segmentierten Rotors, aufgenommen ist, derart, dass die Blechpaketsegmente in radialer Richtung vom Werkzeugkörper überstehen und zwischen benachbarten Blechpaketsegmenten Aufnahmenuten für Leiterabschnitte einer Spulenwicklung gebildet sind; eine Zuführ- und Montageeinrichtung, die dem Innenwerkzeug zugeordnet und eingerichtet ist, für die Spulenwicklung dem Innenwerkzeug eine meanderförmige Leiteranordnung zuzuführen, derart, dass die meanderförmige Leiteranordnung während des Drehens des Innenwerkzeugs um eine axiale Drehachse des Werkzeugkörpers in der Anordnung von Blechpaketsegmenten und Aufnahmenuten eingebringbar ist; und eine Joch-Montageeinrichtung, die eingerichtet ist, nach dem Einbringen der meanderförmige Leiteranordnung die Blechpaketsegmente mit einem Joch zu fügen, zum Beispiel ein Stator- oder ein Rotorjoch.

Der Werkzeugkörper kann zum Beispiel ein rotationssymmetrischer oder ein zylindrischer Werkzeugkörper sein.

Nach einem Aspekt ist ein Innenwerkzeug zum Herstellen eines Halbzeugs für einen segmentierten Stator oder einen segmentierten Rotor einer elektrischen Maschine geschaffen.

Das Blechpaketsegment kann als Zahnsegment ausgebildet sein, zum Beispiel ein Zahnsegment eines segmentierten Stators oder eines segmentierten Rotors.

Mit dem Innenwerkzeug werden die Blechpaketsegmente, die der Ausbildung der innenliegenden Polzähne des (segmentierten) Blechpakets dienen, zum Beispiel eines segmentierten Stators oder eines segmentierten Rotors, dienen, zum folgenden Einbringen der Drahtabschnitte der Wicklung in den Aufnahmenuten angeordnet und gesichert, zum Beispiel für eine Stator- oder eine Rotorwicklung. Die Werkzeug- oder Vorrichtungselemente, die zum Beispiel als ein jeweiliges Fügeelement ausgeführt sein können, dienen an den Blechpaketsegmenten dazu, die Blechpaketsegmente an dem Werkzeugkörper zu stützen, zum Beispiel zu halten, und die Draht- oder Leiterabschnitte der Spulenwicklung beim Einbringen in die Aufnahmenut zu führen, so dass dieses sicher und zielgerichtet in den Aufnahmenuten eingebracht werden können. Die Blechpaketsegmente werden hierbei, insbesondere mittels der Werkzeugelemente, derart in relativer Position zueinander und zum Werkzeugkörper gestützt oder gehalten, dass Innenwerkzeug und hieran angeordnete Blechpaketsegmente nach dem Einbringen der Spulenwicklung zum Ausbilden des Blechpakets im Innenraum eines Jochs eingebracht werden können, um hierbei die Blechpaketsegmente zum Ausbilden der (innenliegenden) Polzähne des (segmentierten) Blechpakets mit dem Joch zu fügen. Die Anordnung mit den am Innenwerkzeug aufgenommenen Blechpaketsegmenten sowie der Spulenwicklung mit den geraden Draht- oder Leiterabschnitten in den Aufnahmenuten zwischen den Blechpaketsegmenten bildet ein Halbzeug für das Blechpaket, welches schließlich mit den Blechpaketsegmenten und dem Joch gebildet und mit der die Wicklung bildenden Spulenwicklung versehen wird.

Mit Hilfe des Innenwerkzeugs kann das Halbzeug mit der Anordnung von Blechpaketsegmenten und Spulenwicklung effizient und für das Draht- oder Leitermaterial der Spulenwicklung materialschonend hergestellt werden, um danach die Blechpaketsegmente mit dem Joch zu fügen.

Zum Ausbilden der Fügeverbindung zwischen den Blechpaketsegmenten und dem Joch können die Blechpaketsegmente radial außenliegend einen Jochfügeabschnitt aufweisen, welcher im Querschnitt beispielsweise eine Schwalbenschwanzform aufweisen kann.

Sind die Blechpaketsegmente entlang der Umfangsfläche des Werkzeugkörpers in den zugeordneten Aufnahmen angeordnet, können sie eine sternförmige Anordnung von Blechpaketsegmenten bilden, zwischen denen die Aufnahmenuten angeordnet sind, in welche dann gerade Leiterabschnitte der Spulenwicklung eingebracht werden können. Hierbei kann beispielsweise vorgesehen sein, die Spulenwicklung mittels einer Wellenwickelmatte auszubilden, deren gerade Leiterabschnitte in den Aufnahmenuten zwischen den Blechpaketsegmenten an dem Werkzeugkörper eingebracht werden.

Die Werkzeugelemente können lösbar an dem Werkzeugkörper angeordnet sein. Die Werkzeugelemente können so abnehmbar an dem Werkzeugkörper montiert werden. Vor dem Einbringen der Leiterabschnitte in den Aufnahmenuten werden die Werkzeugelemente zum Halten oder Sichern der Blechpaketsegmente an dem Werkzeugkörper montiert. Die Werkzeugelemente können von dem Werkzeugkörper nach der erfolgten Montage der Spulenwicklung an der Anordnung von Blechpaketsegmenten gelöst oder getrennt werden.

Die Werkzeugelemente können eingerichtet sein, das jeweils zugeordnete Blechpaketsegment im Bereich eines der Endabschnitte der Blechpaketsegmente, welche in axialer Richtung gegenüberliegend gebildet sind, am Werkzeugkörper haltend aufzunehmen. Auf diese Weise können die Blechpaketsegmente mit Hilfe der Werkzeugelemente im Bereich der gegenüberliegenden Endabschnitte in ihrer Lage an dem Werkzeugkörper gesichert werden. Die Blechpaketsegmente können an dem Werkzeugkörper allein mittels der Werkzeugelemente gehalten werden. Alternativ kann vorgesehen sein, dass die Werkzeugelemente die Blechpaketsegmente ergänzend zu einer Halteverbindung zwischen Blechpaketsegment und Werkzeugkörper sichern. Die Halteverbindung kann zum Beispiel zwischen dem Blechpaketsegment und der zugeordneten Aufnahme an dem Werkzeugkörper ausgebildet sein, beispielsweise als Steck- und / oder Klemmverbindung.

Die Werkzeugelemente können jeweils eine Kappe aufweisen, welche radial außenliegende Eckbereiche der Blechpaketsegmente in den gegenüberliegenden Endabschnitten der Blechpaketsegmente zumindest teilweise bedecken. Die Kappe kann zumindest in Teilen ihrer äußeren Oberfläche eine konvexe Außenfläche aufweisen. Die Kappe kann eine Schutzkappe bildend ausgeführt sein, welche eingerichtet ist, dass Drahtmaterial der Spulenwicklung im Bereich der Ecken der Blechpaketsegmente materialschonend zu führen.

Die Werkzeugelemente können einen Vorsprung aufweisen, welcher in radialer Richtung gegenüber dem zugeordneten Blechpaketsegment vorsteht. Der in radialer Richtung abstehende Vorsprung kann mit der dem Eckbereich der Blechpaketsegmente zugeordneten Kappe gebildet sein.

Die Aufnahmen an dem Werkzeugkörper können eingerichtet sein, die Blechpaketsegmente in einer Einführrichtung aufzunehmen. Es kann vorgesehen sein, dass die Blechpaketsegmente zur Montage am Werkzeugkörper in radialer oder axialer Richtung in die zugeordnete Aufnahme einführbar sind.

Die Werkzeugelemente können mit ihrer Längserstreckung in radialer Richtung verlaufend an dem Werkzeug angeordnet sein. Nach der Montage können die Werkzeugelemente mit Blick in axialer Richtung des Werkzeugkörpers so eine sternförmige Anordnung bildend angeordnet sein. Auf diese Weise ist es ermöglicht, die Werkzeugelemente in Umfangsrichtung platzsparend nebeneinander anzuordnen.

Die Werkzeugelemente können in den Aufnahmenuten angeordnete und die Leiterabschnitte der Spulenwicklung elektrisch isolierende Einlagen in den Aufnahmenuten haltend ausgebildet sein. Die elektrisch isolierende Einlage dient dazu, dass Draht- oder Leitermaterial der Spulenwicklung elektrisch zu isolieren, zum Beispiel vom Stator oder Rotor, wobei der Stator beispielsweise mit einem Blechpaket gebildet ist. Die elektrisch isolierende Einlage kann aus einem Isolierpapier sein. Die Werkzeugelemente dienen bei dieser Ausführungsform zusätzlich dazu, die elektrisch isolierende Einlage in den Aufnahmenuten zu halten, beispielsweise dadurch, dass die elektrisch isolierende Einlage mit Hilfe der Werkzeugelemente in gegenüberliegenden Endabschnitten der Blechpaketsegmente umgriffen wird, derart, dass Abschnitt der elektrisch isolierenden Einlage zwischen dem Blechpaketsegment und dem zugeordneten Werkzeugelement angeordnet sind. Mit Hilfe der Werkzeugelemente kann die elektrisch isolierende Einlage so in der zugeordneten Aufnahmenut gehalten werden, wenn die Spulenwicklung hierin eingebracht wird.

Die Werkzeugelemente können an dem Werkzeugkörper mittels einer Sicherungseinrichtung in einer Montagestellung gesichert sein. In der Montagestellung stützen die Werkzeugelemente die Blechpaketsegmente am Werkzeugkörper, insbesondere haltend und / oder sichernd. Mit Hilfe der Sicherungseinrichtung können die die Blechpaketsegmente haltenden Werkzeugelemente jeweils einzeln an dem Werkzeugkörper gehalten werden. Dieses ermöglicht auch eine einzelne Freigabe der Werkzeugelemente zum Trennen oder Lösen vom Werkzeugkörper. Alternativ kann vorgesehen sein, dass mehrere oder alle Werkzeugelemente gemeinsam gesichert und somit gemein zum Trennen oder Lösen freigegeben werden können. Hierfür kann beispielsweise ein umlaufender Sicherungsring vorgesehen sein, welcher einem jeweiligen Abschnitt der Werkzeugelemente zugeordnet ist, zum Beispiel stützend oder klemmend, um dieses so am Werkzeugkörper zu halten und zu sichern.

Der Werkzeugkörper kann in radialer Richtung kollabierbar und sich so beim Kollabieren von den Blechpaketsegmenten trennend ausgebildet sein. Die kollabierbare Ausführung des Werkzeugkörpers ermöglicht es insbesondere, diesen nach dem Fügen der Blechpaketsegmente mit dem Joch effizient und zuverlässig von den Blechpaketsegmenten zu trennen, um den Werkzeugkörper aus der dann ausgebildeten Anordnung von Joch und hiermit gefügten Polzähnen herauszunehmen. Die Blechpaketsegmente werden beim Kollabieren des Werkzeugkörpers freigegeben und vom Werkzeugkörper getrennt, nachdem die Blechpaketsegmente mit dem Joch gefügt sind, um das Blechpaket auszubilden. Zuvor können die Werkzeugelemente entfernt werden, um das Trennen der Blechpaketsegmente vom Werkzeugkörper zu ermöglichen.

Bei der Vorrichtung zum Herstellen des Blechpakets für eine elektrische Maschine, welche mit dem Innenwerkzeug gebildet ist, kann weiterhin Folgendes vorgesehen sein: die Zuführ- und Montageeinrichtung weist eine Bandeinrichtung mit quer zur Bandlängsrichtung gebildeten Aufnahmevertiefungen auf, welche eingerichtet sind, beim Zuführen Leiterabschnitte der meanderförmige Leiteranordnung aufzunehmen, zum Beispiel eine Wellenwickelmatte, die in den Aufnahmenuten zwischen den Blechpaketsegmenten zu montieren sind; und mindestens eine Einbringeinrichtung ist vorgesehen, mit dem die Leiterabschnitte aus den Aufnahmevertiefungen in die Aufnahmenuten zwischen den Blechpaketsegmenten verlagerbar sind, wobei Wandabschnitte, welche die Aufnahmevertiefungen begrenzen, eine Führung der mindestens einen Einbringeinrichtung hierbei unterstützend ausgebildet sind. Die Einbringeinrichtung kann mit einem Einbringstempel gebildet sein. Öffnungen der Aufnahmevertiefungen der Bandeinrichtung werden beim Zuführen der Wellenwickelmatte den Aufnahmenuten zwischen den Blechpaketsegmenten am Werkzeugkörper gegenüberliegend angeordnet, um so die Übergabe der Leiterabschnitte aus den Aufnahmevertiefungen in die Aufnahmenuten zu ermöglichen. Mittels Druck in radiale Richtung auf den Werkzeugkörper zu werden die Leiterabschnitte aus den Aufnahmevertiefungen in die Aufnahmenuten verlagert. Der Druck wird mit Hilfe des Einbringstempels auf die Leiterabschnitte ausgeübt. Hierbei kann vorgesehen sein, dass während des Überführens aus der Aufnahmevertiefung in die Aufnahmenut der Einbringstempel über die Länge des geraden Drahtabschnitts, welcher in der Aufnahmenut einzubringen ist, an dem Drahtmaterial anliegt. Die Bandeinrichtung kann mit einem Zahnriemen gebildet sein.

Die Vorrichtung zum Herstellen des Blechpakets mit dem Innenwerkzeug kann eingerichtet sein, die meanderförmige Leiteranordnung einem kontinuierlichen oder einem getakteten Prozess entsprechend der Anordnung mit Blechpaketsegmenten und Aufnahmenuten zuzuführen und so die Leiterabschnitte in den Aufnahmenuten zwischen den Blechpaketsegmenten einzubringen. Die Zuführ- und Montageeinrichtung kann eingerichtet sein, die Leiterabschnitte in den Aufnahmenuten mit einem kontinuierlichen Vorschub in radialer Richtung in die Aufnahmenut hinein einzubringen.

Die Werkzeugelemente können jeweils ein- oder mehrstückig ausgeführt sein. In einer Ausführungsform können die Werkzeugelemente mit einer durchgehenden Leiste gebildet sein, die sich längs des zugeordneten Blechpaketsegments erstreckt. In den verschiedenen Ausgestaltungen können die Werkzeugelemente eingerichtet sein, das zugeordnete Blechpaketsegment in nur einem der gegenüberliegenden Endbereiche oder beidseitig zu halten oder zu stützen, also in beiden der gegenüberliegenden Endbereiche.

Beim Ausbilden der Wicklung, zum Beispiel als Stator- oder Rotorwicklung, kann sich das Innenwerkzeug um eine Mittelachse des Werkzeugkörpers drehen, sei es kontinuierlich oder in getakten Drehbewegungsabschnitten.

Die vorangehend im Zusammenhang mit dem Innenwerkzeug erläuterten Ausgestaltungsformen können in Verbindung mit dem Verfahren zum Ausbilden des Innenwerkzeugs und / oder der Vorrichtung zum Herstellen des Blechpakets entsprechend vorgesehen sein.

### Beschreibung von Ausführungsbeispielen

Im Folgenden werden weitere Ausführungsbeispiele unter Bezugnahme auf Figuren einer Zeichnung erläutert. Hierbei zeigen:
- Fig. 1: eine schematische perspektivische Darstellung eines Innenwerkzeugs zum Herstellen eines Halbzeugs für ein Blechpaket einer elektrischen Maschine, insbesondere einen segmentierten Stator, von vorn;
- Fig. 2: eine schematische perspektivische Darstellung des Innenwerkzeugs aus Fig. 1 von schräg unten;
- Fig. 3: eine schematische perspektivische Darstellung des Innenwerkzeugs aus Fig. 1 schräg von der Seite;
- Fig. 4: eine schematische perspektivische Detaildarstellung des Innenwerkzeugs aus Fig. 1 von schräg unten;
- Fig. 5: eine schematische perspektivische Darstellung eines Innenwerkzeugs zum Herstellen eines Halbzeugs für ein Blechpaket, insbesondere einen segmentierten Stator einer elektrischen Maschine, wobei in Aufnahmenuten zwischen Blechpaketsegmenten eine elektrisch isolierende Einlage angeordnet ist;
- Fig. 6: eine schematische perspektivische Darstellung eines Abschnitts des Innenwerkzeugs nach dem Einbringen einer Spulenwicklung in den Aufnahmenuten zwischen den Blechpaketsegmenten;
- Fig. 7: eine schematische perspektivische Darstellung eines Abschnitts des Innenwerkzeugs mit montierten Werkzeugelementen;
- Fig. 8: eine schematische Darstellung eines Teils einer Vorrichtung zum Herstellen eines Halbzeugs für ein Blechpaket, insbesondere einen segmentierten Stator, mit Innenwerkzeug, wobei einem Innenwerkzeug mit hieran angeordneten Blechpaketsegmenten eine Wellenwickelmatte zugeführt wird; und
- Fig. 9: eine schematische Darstellung eines segmentierten Stators einer elektrischen Maschine von einer Stirnseite.

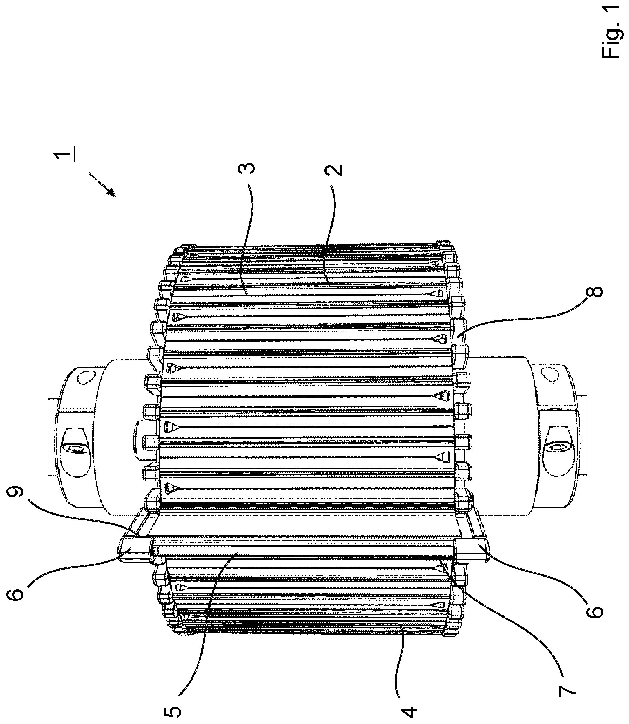

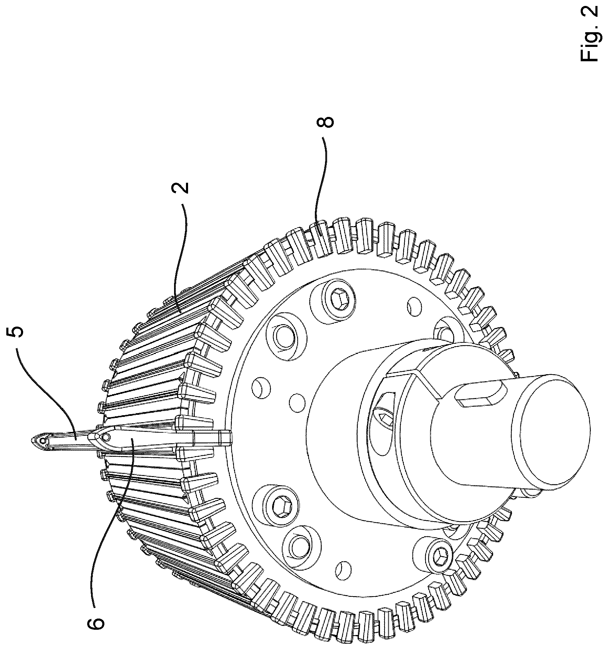

Fig. 1 bis 4 zeigen schematische perspektivische Darstellungen eines Innenwerkzeugs 1 mit einem Werkzeugkörper 2, der als zylindrischer oder rotationssymmetrischer Werkzeugkörper ausführbar ist und an dessen Umfangsfläche 3 umlaufend Aufnahmen 4 angeordnet sind. Die Aufnahmen 4 dienen dazu, Blechpaketsegmente aufzunehmen, wie dies in den Fig. 1 bis 4 für ein einzelnes Blechpaketsegment 5 gezeigt ist, bei dem es sich zum Beispiel um eine Zahnsegment handeln kann. Das Blechpaketsegment 5, wie dann auch weitere Blechpaketsegmente (nicht dargestellt), dient dem Ausbilden eines jeweiligen Polzahns eines segmentierten Blechpaket für eine elektrische Maschine, insbesondere einen segmentierten Stator, derart, dass der Polzahn von einem umlaufenden Joch ausgehend radial nach innen verläuft, wie dies zum Beispiel für Statoren an sich bekannt ist.

Nach dem Einstecken des Blechpaketsegments 5 in die zugeordnete Aufnahme 4 wird das Blechpaketsegment 5 mit Hilfe von Werkzeugelementen 6 im Bereich entgegenüberliegender Endabschnitte 7 des Blechpaketsegments 5 jeweils an dem Werkzeugkörper 2 gehalten. Die Werkzeugelemente 6, welche als Fügeelemente ausgeführt sein können, werden hierzu zwischen benachbarten Montageabschnitten 8 angeordnet, derart, dass die Werkzeugelemente 6 jeweils einen Eckbereich 9 des Blechpaketsegments 5 umgreifen.

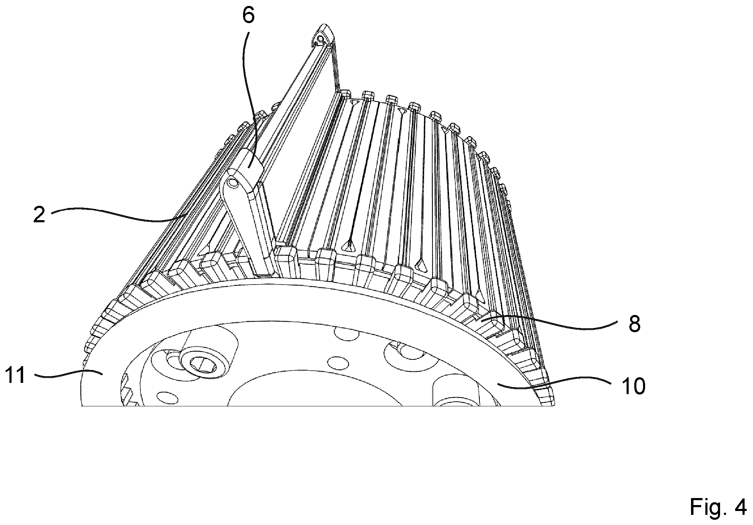

Zur gemeinsamen Sicherung der Werkzeugelemente 6 an dem Werkzeugkörper 2 ist eine Sicherungseinrichtung 10 vorgesehen, die bei dem gezeigten Beispiel mit einem Sicherungsring 11 gebildet ist (vgl. Fig. 4).

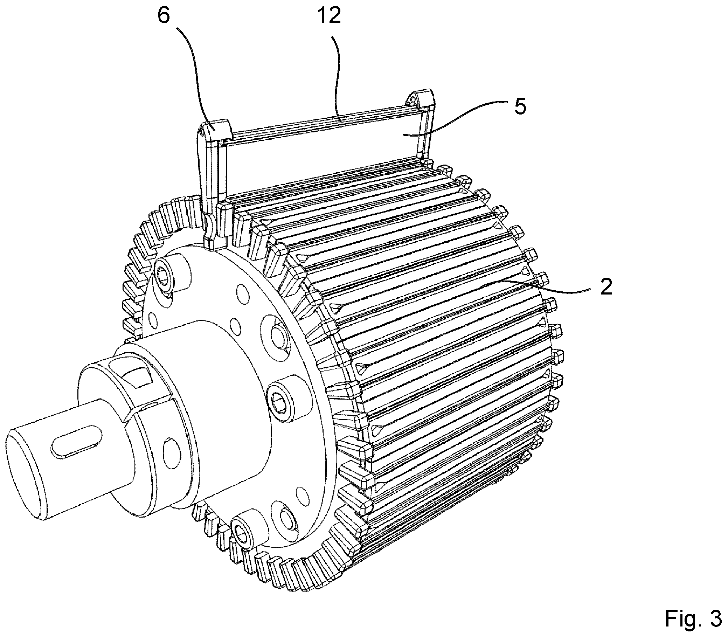

Zum (späteren) Fügen mit dem Statorjoch weist das Blechpaketsegment 5 radial außenliegend einen Fügeabschnitt 12 auf (vgl. Fig. 3), der sich über die Länge des Blechpaketsegments 5 erstreckt und bei dem gezeigten Beispiel im Querschnitt schwalbenschwanzförmig ausgeführt ist.

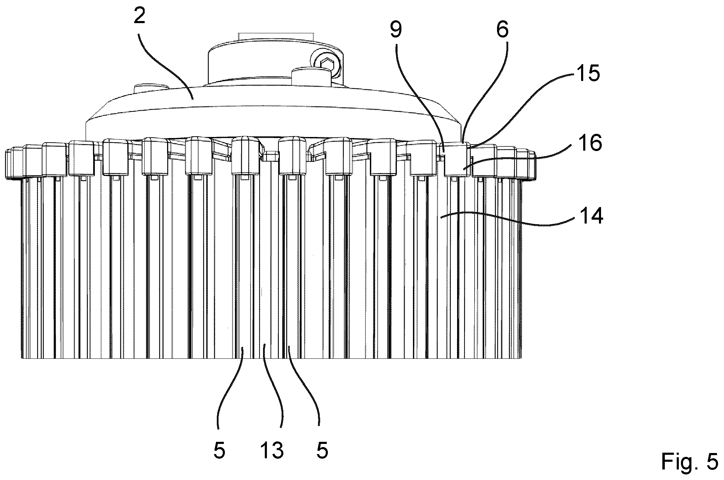

Zum Herstellen eines Halbzeugs für den segmentierten Stator werden an dem Werkzeugkörper 2 umlaufend Blechpaketsegmente vergleichbar dem Blechpaketsegment 5 in den Fig. 1 bis 4 angeordnet, so dass umlaufend Aufnahmenuten 13 zwischen benachbarten Blechpaketsegmenten 5 gebildet werden, wie dies Fig. 5 für einen Teilabschnitt des Innenwerkzeugs 1 mit dem Werkzeugkörper 2 zeigt. Gemäß Fig. 5 sind in den Aufnahmenuten 13 elektrisch isolierende Einlagen 14 eingelegt, die beispielsweise aus Isolierpapier sind, um die Aufnahmenuten 13 so für das folgende Einbringen der Leiterabschnitte einer Spulenwicklung vorzubereiten. Die elektrisch isolierenden Einlagen werden mit Hilfe der Werkzeugelemente 6 in den Aufnahmenuten 13 gehalten. Gemäß Fig. 5 erfolgt dies im Bereich eines radial außen angeordneten Vorsprung 15 des Werkzeugelements 6, welcher in radialer Richtung über das zugeordnete Blechpaketsegment 5 absteht. Der Vorsprung 15 ist an einer Kappe 16 gebildet, die den Eckbereich 9 des Blechpaketsegments 5 umgreift und zumindest abschnittsweise mit einer konvexen Oberfläche gebildet ist, um so die in den Aufnahmenuten 13 einzubringenden Leiterabschnitte zu führen.

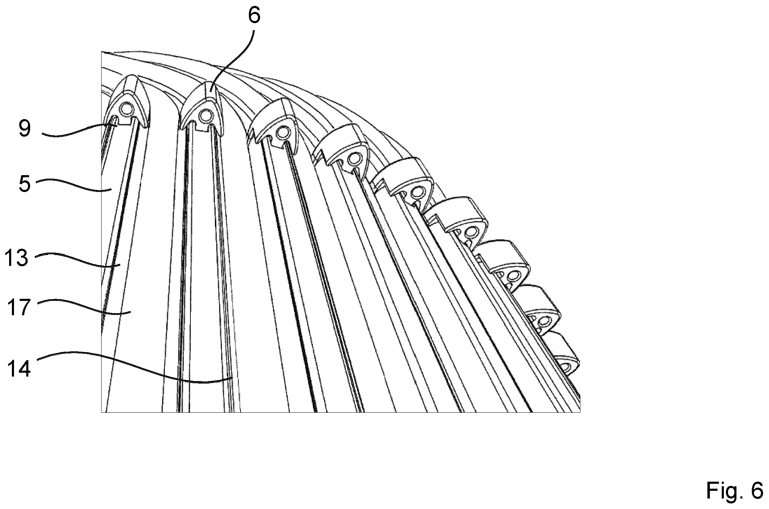

Fig. 6 zeigt eine Detaildarstellung nach dem Einbringen von geraden Leiterabschnitten 17 in den Aufnahmenuten 13, wodurch ein Halbzeug für den segmentierten Stator der elektrischen Maschine bereitgestellt ist, um nachfolgend die Blechpaketsegmente 5 mit der hierauf angeordneten Spulenwicklung mit dem Statorjoch zu verbinden, wobei zuvor die Werkzeugelemente 6 entfernt werden.

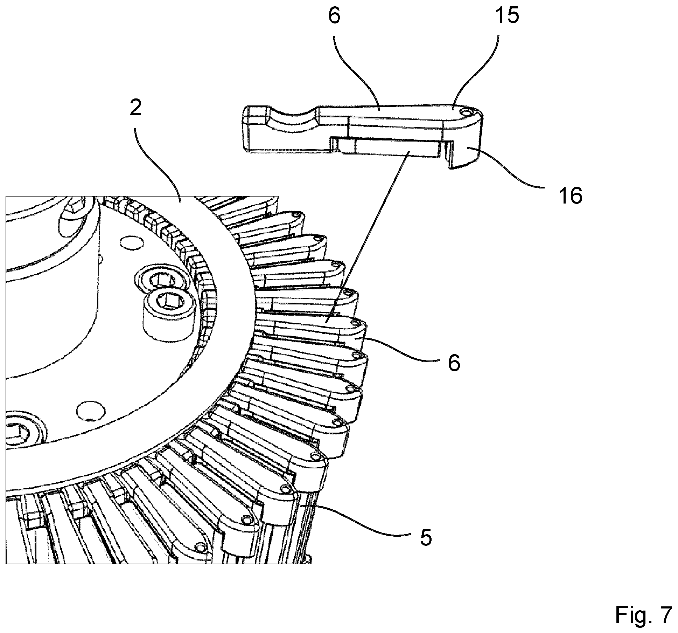

Hierzu zeigt Fig. 7 noch eine Detaildarstellung in Verbindung mit den Werkzeugelementen 6, welche eine sternförmige Anordnung bilden und lösbar am Werkzeugkörper 2 angeordnet sind, um die Blechpaketsegmente 5 hieran zu sichern und die Leiterabschnitte 17 beim Einbringen in den Aufnahmenuten 13 zu führen. Ein Werkzeugelement 6 ist in einer gelösten Stellung getrennt vom Werkzeugkörper 2 gezeigt.

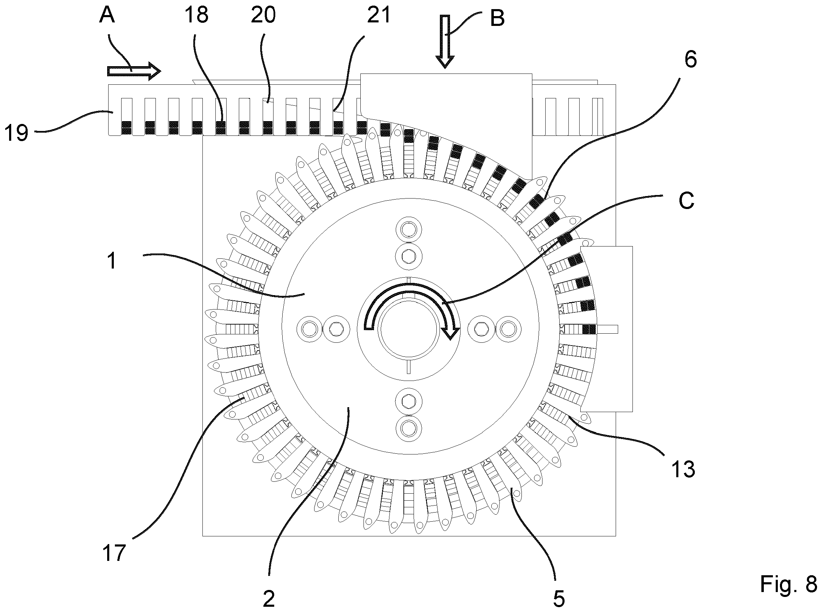

Das Einbringen der Leiterabschnitte 17 ist in Fig. 8 schematisch dargestellt, wobei das Innenwerkzeug 1 von oben gezeigt ist. Die Zuführung einer Wickelmatte 18 zum Ausbilden der Statorwicklung erfolgt mit Hilfe einer Bandeinrichtung 19, die Aufnahmevertiefungen 20 für die Leiterabschnitte 17 aufweist und in einer Vorschubrichtung A bewegt wird, sei es getaktet oder kontinuierlich. Aus den Aufnahmevertiefungen 20 heraus werden die Leiterabschnitte 17 dann in den Aufnahmenuten 13 in Richtung B eingebracht, wobei hierzu ein Schieberbauteil (nicht dargestellt) verwendet wird, welches von Wandabschnitten 21 der Bandeinrichtung 19 geführt wird. Das Innenwerkzeug 1 dreht sich in Drehrichtung C.

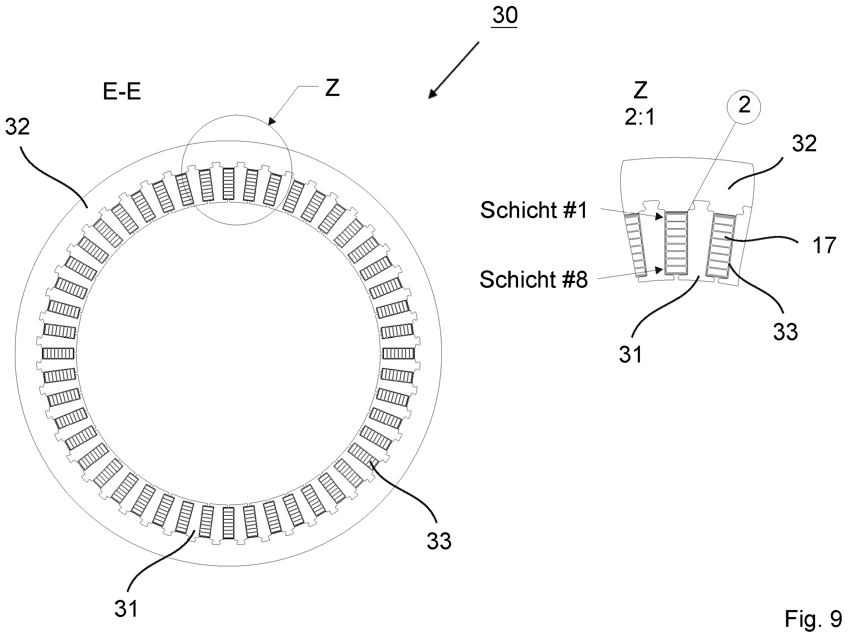

Fig. 9 zeigt eine schematische Darstellung eines segmentierten Stators 30 einer elektrischen Maschine von einer Stirnseite. Die Blechpaketsegmente 5 sind Polzähne 31 ausbildend an einem Statorjoch 32 innenseitig umlaufend angeordnet, im gezeigten Ausführungsbeispiel mittels einer jeweiligen Schwalbenschwanzführung. In den Nuten 33 zwischen den Polzähnen sind die vorher montierten Leiterabschnitte 17 angeordnet, wobei beispielhaft acht Schichten pro Nut gebildet sind.

Vorangehend wurde beispielhaft ein segmentierter Stator beschrieben. In gleicher Weise kann die beschriebene Technologie in Verbindung mit einem segmentierten Rotor vorgesehen sein, allgemein einem (segmentierten) Blechpaket für eine elektrische Maschine.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Innenwerkzeug (1) zum Herstellen eines Halbzeugs für ein Blechpaket einer elektrischen Maschine, mit
- einem Werkzeugkörper (2);
- Aufnahmen (4), die an dem Werkzeugkörper (2) entlang einer Umfangsfläche (3) beabstandet zueinander gebildet und eingerichtet sind, jeweils ein Blechpaketsegment (5) eines Blechpaket aufzunehmen, derart, dass ein an der Aufnahme angeordnetes Blechpaketsegment (5) jeweils in radialer Richtung vom Werkzeugkörper (2) absteht und zwischen benachbarten Blechpaketsegmenten (5) Aufnahmenuten (13) für Leiterabschnitte (17) einer Spulenwicklung gebildet sind; und
- Werkzeugelementen (6), die den Blechpaketsegmenten (5) zugeordnet und eingerichtet sind, die Blechpaketsegmente (5) an dem Werkzeugkörper (2) zu stützen und die Leiterabschnitte (17) der Spulenwicklung beim Einbringen in den Aufnahmenuten (13) im Bereich der in axialer Richtung gegenüberliegenden Endabschnitte der Blechpaketsegmente in die Aufnahmenuten (13) zu führen.

2. Innenwerkzeug (1) nach Anspruch 1, **dadurch gekennzeichnet, dass** die Werkzeugelemente (6) lösbar an dem Werkzeugkörper (2) angeordnet sind.

3. Innenwerkzeug (1) nach Anspruch 1 oder 2, **dadurch gekennzeichnet, dass** die Werkzeugelemente (6) eingerichtet sind, das jeweils zugeordnete Blechpaketsegment (5) im Bereich eines der Endabschnitte der Blechpaketsegmente (5), welche in axialer Richtung gegenüberliegend gebildet sind, am Werkzeugkörper (2) stützend aufzunehmen.

4. Innenwerkzeug (1) nach Anspruch 3, **dadurch gekennzeichnet, dass** die Werkzeugelemente (6) jeweils eine Kappe (16) aufweisen, welche einen radial außenliegenden Eckbereich (9) der Blechpaketsegmente (5) in den gegenüberliegenden Endabschnitten der Blechpaketsegmente (5) zumindest teilweise bedeckt.

5. Innenwerkzeug (1) nach mindestens einem der vorangehenden Ansprüche, **dadurch gekennzeichnet, dass** die Werkzeugelemente (6) einen Vorsprung (15) aufweisen, welcher in radialer Richtung gegenüber dem zugeordneten Blechpaketsegment (5) vorsteht.

6. Innenwerkzeug (1) nach mindestens einem der vorangehenden Ansprüche, **dadurch gekennzeichnet, dass** die Aufnahmen (4) an dem Werkzeugkörper (2) eingerichtet sind, die Blechpaketsegmente (5) in einer Einführrichtung aufzunehmen.

7. Innenwerkzeug (1) nach mindestens einem der vorangehenden Ansprüche, **dadurch gekennzeichnet, dass** die Werkzeugelemente (6) mit ihrer Längserstreckung in radialer Richtung verlaufend an dem Werkzeugkörper (2) angeordnet sind.

8. Innenwerkzeug (1) nach mindestens einem der vorangehenden Ansprüche, **dadurch gekennzeichnet, dass** die Werkzeugelemente (6) in den Aufnahmenuten (13) angeordnete und die Leiterabschnitte (17) der Spulenwicklung elektrisch isolierende Einlagen (14) in den Aufnahmenuten (13) haltend ausgebildet sind.

9. Innenwerkzeug (1) nach mindestens einem der vorangehenden Ansprüche, **dadurch gekennzeichnet, dass** die Werkzeugelemente (6) an dem Werkzeugkörper (2) mittels einer Sicherungseinrichtung (10) in einer Montagestellung gesichert sind.

10. Innenwerkzeug (1) nach mindestens einem der vorangehenden Ansprüche, **dadurch gekennzeichnet, dass** der Werkzeugkörper (2) in radialer Richtung kollabierbar und sich so beim Kollabieren von den Blechpaketsegmenten (5) trennend ausgebildet ist.

11. Verfahren zum Ausbilden eines Innenwerkzeugs (1) für die Herstellung eines Halbzeugs für ein Blechpaket einer elektrischen Maschine, mit
- Bereitstellen eines Werkzeugkörpers (2);
- Anordnen von Blechpaketsegmenten (5) eines Blechpakets in Aufnahmen (4), die an dem Werkzeugkörper (2) entlang einer Umfangsfläche (3) beabstandet zueinander gebildet sind, derart, dass ein an der Aufnahme (4) angeordnetes Blechpaketsegment (5) jeweils in radialer Richtung vom Werkzeugkörper (2) absteht und zwischen benachbarten Blechpaketsegmenten (5) Aufnahmenuten (13) für Leiterabschnitte einer Spulenwicklung gebildet sind; und
- Anordnen von Werkzeugelementen (6) an den Blechpaketsegmenten (5), wobei die Werkzeugelemente (6) eingerichtet sind, die Blechpaketsegmente (5) an dem Werkzeugkörper (2) zu stützen und die Leiterabschnitte (17) der Spulenwicklung beim Einbringen in den Aufnahmenuten (13) im Bereich der in axialer Richtung gegenüberliegenden Endabschnitte der Blechpaketsegmente in die Aufnahmenuten (13) zu führen.

12. Vorrichtung zum Herstellen eines Blechpaket für eine elektrische Maschine, mit
- einem Innenwerkzeug (1) nach mindestens einem der Ansprüche 1 bis 10, wobei in Aufnahmen (4), die am Werkzeugkörper (2) entlang einer Umfangsfläche (3) beabstandet zueinander gebildet sind, jeweils ein Blechpaketsegment (5) eines Blechpakets aufgenommen ist, derart, dass die Blechpaketsegmente (5) in radialer Richtung vom Werkzeugkörper (2) überstehen und zwischen benachbarten Blechpaketsegmenten (5) Aufnahmenuten (13) für Leiterabschnitte (17) einer Spulenwicklung gebildet sind;
- einer Zuführ- und Montageeinrichtung, die dem Innenwerkzeug (1) zugeordnet und eingerichtet ist, für die Spulenwicklung dem Innenwerkzeug (1) eine meanderförmige Leiteranordnung (18) zuzuführen, derart, dass die meanderförmige Leiteranordnung (18) während des Drehens des Innenwerkzeugs (1) um eine axiale Drehachse des Werkzeugkörpers (2) in der Anordnung von Blechpaketsegmenten (5) und Aufnahmenuten (13) eingebringbar ist; und
- einer Joch-Montageeinrichtung, die eingerichtet ist, nach dem Einbringen der meanderförmige Leiteranordnung (18) die Blechpaketsegmente (5) mit einem Joch zu fügen.

13. Vorrichtung nach Anspruch 12, **dadurch gekennzeichnet, dass**
- die Zuführ- und Montageeinrichtung eine Bandeinrichtung (19) mit quer zur Bandlängsrichtung gebildeten Aufnahmevertiefungen (20) aufweist, welche eingerichtet sind, beim Zuführen Leiterabschnitte (17) der meanderförmige Leiteranordnung (18) aufzunehmen, die in den Aufnahmenuten (13) zwischen den Blechpaketsegmenten (5) zu montieren sind; und
- mindestens eine Einbringeinrichtung vorgesehen ist, mit der die Leiterabschnitte (17) aus den Aufnahmevertiefungen (20) in die Aufnahmenuten (13) zwischen den Blechpaketsegmenten (5) verlagerbar sind, wobei Wandabschnitte (21), welche die Aufnahmevertiefungen (20) begrenzen, eine Führung der mindestens einen Einbringeinrichtung hierbei unterstützend ausgebildet sind.

## Claims

1. Internal tool (1) for producing a semi-finished product for a laminated core of an electrical machine, comprising:
- a tool body (2);
- receptacles (4) which are formed on the tool body (2) at a distance from one another along a circumferential surface (3) and are configured to each receive a laminated core segment (5) of a laminated core in such a way that a laminated core segment (5) arranged on the receptacle projects in each case in the radial direction from the tool body (2) and receiving grooves (13) for conductor sections (17) of a coil winding are formed between adjacent laminated core segments (5); and
- tool elements (6) which are assigned to the laminated core segments (5) and are configured to support the laminated core segments (5) on the tool body (2) and to guide the conductor sections (17) of the coil winding into the receiving grooves (13) during introduction into the receiving grooves (13) in the region of the end sections of the laminated core segments which lie opposite one another in the axial direction.

2. Internal tool (1) according to Claim 1, **characterized in that** the tool elements (6) are arranged releasably on the tool body (2).

3. Internal tool (1) according to Claim 1 or 2, **characterized in that** the tool elements (6) are configured to receive the respectively assigned laminated core segment (5) on the tool body (2) in a supporting manner in the region of one of the end sections of the laminated core segments (5) which are formed opposite one another in the axial direction.

4. Internal tool (1) according to Claim 3, **characterized in that** the tool elements (6) each comprise a cap (16) which at least partially covers a radially outer corner region (9) of the laminated core segments (5) in the opposite end sections of the laminated core segments (5).

5. Internal tool (1) according to at least one of the preceding claims, **characterized in that** the tool elements (6) comprise a projection (15) which projects in the radial direction with respect to the assigned laminated core segment (5).

6. Internal tool (1) according to at least one of the preceding claims, **characterized in that** the receptacles (4) on the tool body (2) are configured to receive the laminated core segments (5) in an insertion direction.

7. Internal tool (1) according to at least one of the preceding claims, **characterized in that** the tool elements (6) are arranged on the tool body (2) with their longitudinal extent running in the radial direction.

8. Internal tool (1) according to at least one of the preceding claims, **characterized in that** the tool elements (6) are configured to hold inserts (14) which are arranged in the receiving grooves (13) and electrically insulate the conductor sections (17) of the coil winding in the receiving grooves (13).

9. Internal tool (1) according to at least one of the preceding claims, **characterized in that** the tool elements (6) on the tool body (2) are secured in an assembly position by means of a securing device (10).

10. Internal tool (1) according to at least one of the preceding claims, **characterized in that** the tool body (2) is configured to be collapsible in the radial direction and thus to separate from the laminated core segments (5) during collapsing.

11. Method for forming an internal tool (1) for producing a semi-finished product for a laminated core of an electrical machine, comprising:
- providing a tool body (2);
- arranging laminated core segments (5) of a laminated core in receptacles (4) which are formed on the tool body (2) at a distance from one another along a circumferential surface (3) in such a way that each laminated core segment (5) arranged on the receptacle (4) projects in the radial direction from the tool body (2) and receiving grooves (13) for conductor sections of a coil winding are formed between adjacent laminated core segments (5); and
- arranging tool elements (6) on the laminated core segments (5), wherein the tool elements (6) are configured to support the laminated core segments (5) on the tool body (2) and to guide the conductor sections (17) of the coil winding into the receiving grooves (13) during introduction into the receiving grooves (13) in the region of the end sections of the laminated core segments which lie opposite one another in the axial direction.

12. Device for producing a laminated core for an electrical machine, comprising:
- an internal tool (1) according to at least one of claims 1 to 10, wherein a respective laminated core segment (5) of a laminated core is received in receptacles (4) which are formed on the tool body (2) at a distance from one another along a circumferential surface (3) in such a way that the laminated core segments (5) project in the radial direction from the tool body (2) and receiving grooves (13) for conductor sections (17) of a coil winding are formed between adjacent laminated core segments (5);
- a feeding and assembly device which is assigned to the internal tool (1) and is configured, for the winding of a coil, to feed a meandering conductor arrangement (18) to the internal tool (1) in such a way that the meandering conductor arrangement (18) can be introduced into the arrangement of laminated core segments (5) and receiving grooves (13) during rotation of the internal tool (1) about an axial axis of rotation of the tool body (2); and
- a yoke assembly device which is configured, after introduction of the meandering conductor arrangement (18), to join the laminated core segments (5) to a yoke.

13. Device according to Claim 12, **characterized in that**
- the feeding and assembly device has a tape device (19) with receiving depressions (20) which are formed transversely to the longitudinal direction of the tape and are configured, during feeding, to receive conductor sections (17) of the meandering conductor arrangement (18) which are to be mounted in the receiving grooves (13) between the laminated core segments (5); and
- at least one introduction device is provided, by means of which the conductor sections (17) can be displaced out of the receiving depressions (20) into the receiving grooves (13) between the laminated core segments (5), wherein wall sections (21) which delimit the receiving depressions (20) are configured to support guidance of the at least one introduction device in this case.

## Revendications

1. Outil intérieur (1) permettant de fabriquer un demi-produit pour un paquet de tôles d'une machine électrique, avec
- un corps d'outil (2),
- des logements (4), qui sont formés sur le corps d'outil (2) le long d'une surface périphérique (3) à distance l'un de l'autre et agencés pour recevoir respectivement un segment de paquet de tôles (5) d'un paquet de tôles de telle manière qu'un segment de paquet de tôles (5) disposé sur le logement ressort respectivement en direction radiale du corps d'outil (2) et des rainures de réception (13) pour les sections de conducteur (17) d'un enroulement de bobine sont formées entre les segments de paquet de tôles (5) voisins, et
- des éléments d'outil (6), qui sont attribués aux segments de paquet de tôles (5) et agencés pour soutenir les segments de paquet de tôles (5) sur le corps d'outil (2) et guider les sections de conducteur (17) de l'enroulement de bobine lors de la mise en place dans les rainures de réception (13) dans la zone des sections finales de segments de paquet de tôles opposées dans la direction axiale dans les rainures de réception (13).

2. Outil intérieur (1) selon la revendication 1, **caractérisé en ce que** les éléments d'outil (6) sont disposés de façon amovible sur le corps d'outil (2).

3. Outil intérieur (1) selon la revendication 1 ou 2, **caractérisé en ce que** les éléments d'outil (6) sont agencés pour recevoir en soutien sur le corps d'outil (2) le segment de paquet de tôles (5) respectivement attribué dans la zone d'une des sections finales des segments de paquet de tôles (5), lesquels sont formés opposés dans la direction axiale.

4. Outil intérieur (1) selon la revendication 3, **caractérisé en ce que** les éléments d'outil (6) comportent respectivement un capuchon (16), lequel couvre au moins en partie une zone d'angle (9) des segments de paquet de tôles (5) située radialement à l'extérieur dans des sections finales opposées des segments de paquet de tôles (5).

5. Outil intérieur (1) selon au moins l'une quelconque des revendications précédentes, **caractérisé en ce que** les éléments d'outil (6) comportent une saillie (15), laquelle ressort dans la direction radiale par rapport au segment de paquet de tôles attribué (5).

6. Outil intérieur (1) selon au moins l'une quelconque des revendications précédentes, **caractérisé en ce que** les logements (4) sur le corps d'outil (2) sont agencés pour recevoir les segments de paquet de tôles (5) dans une direction d'insertion.

7. Outil intérieur (1) selon au moins l'une quelconque des revendications précédentes, **caractérisé en ce que** les éléments d'outil (6) sont disposés sur le corps d'outil (2) passant dans le sens radial avec leur extension longitudinale.

8. Outil intérieur (1) selon au moins l'une quelconque des revendications précédentes, **caractérisé en ce que** les éléments d'outil (6) sont constitués maintenant des couches d'insertion électro-isolantes (14) disposées dans les rainures de réception (13) et les sections de conducteur (17) de l'enroulement de bobine dans les rainures de réception (13).

9. Outil intérieur (1) selon au moins l'une quelconque des revendications précédentes, **caractérisé en ce que** les éléments d'outil (6) sont fixés sur le corps d'outil (2) dans une position de montage au moyen d'un système de fixation (10).

10. Outil intérieur (1) selon au moins l'une quelconque des revendications précédentes, **caractérisé en ce que** le corps d'outil (2) est constitué pouvant être aplati dans la direction radiale et se séparant ainsi lors de l'aplatissement des segments de paquet de tôles (5)

11. Procédé de formation d'un outil intérieur (1) pour la fabrication d'un demi-produit pour un paquet de tôles d'une machine électrique, avec
- fourniture d'un corps d'outil (2),
- disposition de segments de paquet de tôles (5) d'un paquet de tôles dans des logements (4), qui sont formés sur le corps d'outil (2) le long d'une surface périphérique (3) à distance l'un de l'autre de telle manière qu'un segment de paquet de tôles (5) disposé sur le logement (4) ressort respectivement en direction radiale du corps d'outil (2) et des rainures de réception (13) pour les, sections de conducteur d'un enroulement de bobine sont formées entre les segments de paquet de tôles (5) voisins, et
- disposition d'éléments d'outil (6) sur les segments de paquet de tôles (5), sachant que les éléments d'outil (6) sont agencés pour soutenir les segments de paquet de tôles (5) sur le corps d'outil (2) et guider les sections de conducteur (17) de l'enroulement de bobine lors de la mise en place dans les rainures de réception (13) dans la zone des sections finales de segments de paquet de tôles opposées dans la direction axiale dans les rainures de réception (13).

12. Dispositif de fabrication d'un paquet de tôles pour une machine électrique, avec
- un outil intérieur (1) selon au moins l'une quelconque des revendications 1 à 10, sachant que dans les logements (4), qui sont formés sur le corps d'outil (2) le long d'une surface périphérique (3) à distance l'un de l'autre, est respectivement logé un segment de paquet de tôles (5) d'un paquet de tôles de telle manière que les segments de paquet de tôles (5) dépassent dans la direction radiale depuis le corps d'outil (2) et que des rainures de réception (13) pour des sections de conducteur (17) d'un enroulement de bobine sont formées entre les segments de paquet de tôles (5) voisins,
- un système d'alimentation et de montage, qui est attribué à l'outil intérieur (1) et agencé pour acheminer à l'outil intérieur (1) un système de conducteurs (18) en forme de méandre pour l'enroulement de bobine de telle manière que le système de conducteurs (18) en forme de méandre peut être introduit pendant la rotation de l'outil intérieur (1) autour d'un axe de rotation axial du corps d'outil (2) dans l'agencement de segments de paquet de tôles (5) et de rainures de réception (13), et
- un système de montage de culasse, qui est agencé pour assembler les segments de paquet de tôles (5) avec un culasse après la mise en place du système de conducteurs (18) en forme de méandre.

13. Dispositif selon la revendication 12, **caractérisé en ce que**
- le système d'alimentation et de montage comporte un système à bande (19) avec des cavités de réception (20) formées transversalement à la direction longitudinale de la bande, lesquelles sont agencées pour recevoir lors de l'alimentation des sections de conducteur (17) du système de conducteurs en forme de méandre (18), qui sont à monter dans les rainures de réception (13) entre les segments de paquet de tôles (5), et
- au moins un système de mise en place est prévu avec lequel les sections de conducteur (17) peuvent être déplacées des cavités de réception (20) dans les rainures de réception (13) entre les segments de paquet de tôles (5), sachant que les sections de paroi (21), lesquelles limitent les cavités de réception (20), sont constituées soutenant à cet effet un guidage d'au moins un système de mise en place.
